# EUROPÄISCHE PATENTANMELDUNG

(11) **EP 3 913 070 A1**
(43) Veröffentlichungstag der Anmeldung: **24.11.2021**
(21) Anmeldenummer: 20175483.5
(22) Anmeldetag: 19.05.2020
(51) Int. Cl.: C21B 3/08, B01J 2/16

(54) **VERFAHREN UND VORRICHTUNG ZUR TROCKENGRANULIERUNG**

(71) Anmelder: Primetals Technologies Austria GmbH, 4031 Linz (AT)
(72) Erfinder: Fenzl, Thomas, 4073 Wilhering (AT); Neuhold, Robert, 9523 Villach-Landskron (AT); Fleischanderl, Alexander, 4645 Gruenau (AT)
(74) Vertreter: Metals@Linz

(57) **Zusammenfassung**

Gezeigt wird ein Verfahren zur Trockengranulierung von schmelzflüssigem Material, wobei aus diesem erzeugte Partikel in zumindest einer Wirbelschicht mittels Prozessgas gekühlt werden, und zumindest in derjenigen Wirbelschicht, in welche die Partikel direkt nach ihrer Erzeugung eintreten, die Zuführung des Prozessgases in die Wirbelschicht in mehreren separaten Zonen erfolgt. Ebenso werden ein entsprechender Granulator und eine Signalverarbeitungsvorrichtung, ein maschinenlesbarer Programmcode, ein Speichermedium für den Programmcode und ein Computerprogrammprodukt dazu gezeigt.

## Beschreibung

### Gebiet der Technik

Die Erfindung betrifft ein Verfahren zur Trockengranulierung von schmelzflüssigem Material und einen Granulator.

### Stand der Technik

Die Trockengranulierung von schmelzflüssigem Material ist eine in Entwicklung befindliche Technologie, um schmelzflüssiges Material zu einem festen Granulat zu verarbeiten. Schmelzflüssiges Material ist beispielsweise geschmolzenes Metall oder metallurgische Schlacke, beispielsweise schmelzflüssige Hochofenschlacke - das Verfahren wird dann auch dry slag granulation DSG genannt und ist beispielsweise in EP2747920B1 beschrieben. Trocken bedeutet in diesem Zusammenhang, dass das schmelzflüssige Material bei der Granulierung nicht in direkten Kontakt mit flüssigem Wasser kommt - das ist beispielsweise ein Gegensatz zu herkömmlich industriell angewendeten Verfahren zur Granulierung von Hochofenschlacke, bei denen die schmelzflüssige Schlacke in einen Wasserstrom eingeleitet wird. Der Granulator ist ein durch eine Umhüllung begrenzter Behälter, der über eine Schlackenzuführung, eine Gaszuführung für das Prozessgas und eine Abgasleitung für erwärmtes Prozessgas - im Rahmen dieser Anmeldung auch Prozessabgas genannt -, beispielsweise Luft - auch genannt Prozessluft -, verfügt. Das schmelzflüssige Material, beispielsweise flüssige Schlacke, wird auf eine in der Umhüllung des Granulators befindliche Zerstäubungseinheit aufgebracht; das ist beispielsweise eine schnell rotierende Einheit, bekannt als Rotationszerstäuber - auch genannt rotary atomiser; soetwas ist beispielsweise in EP2747920B1 gezeigt. Durch die auftretenden Kräfte wird das schmelzflüsssige Material in feine Tropfen zerrissen und nach außen geschleudert. Diese feinen, zunächst immer noch schmelzflüssigen Tropfen werden im Granulator gekühlt und erstarren, das geschieht beispielsweise durch das Prozessgas und durch Auftreffen auf - gegebenenfalls gekühlte - Flächen des Granulators, beispielsweise die wassergekühlte Umhüllung des Granulators - infolgedessen entstehen feste Partikel, hier Granulat genannt, die dann aus dem Granulator entnommen werden. Nach einer bekannten Arbeitsweise fallen flüssige beziehungsweise teilweise verfestigte - also teils flüssig teils erstarrt - Tropfen im Granulator nach dem Verlassen des Rotationszerstäubers und anschließendem Auftreffen auf der Umhüllung des Granulators nach unten in eine Wirbelschicht. In der Wirbelschicht werden die Partikel durchgehend verfestigt. Die Wirbelschicht wird von Prozessgas entgegen der Schwerkraft durchströmt. Dadurch werden die Partikel in einen fluidisierten Zustand versetzt, und die durchströmte Menge nimmt praktisch Fluid-ähnliche Eigenschaften an, was auch fluidisieren genannt wird und in der Verfahrenstechnik ein bekanntes Prinzip ist. Ausgehend von einem Festbett beziehungsweise fixed bed genannten Zustand, in dem das Prozessgas ein Schüttgut durchströmt, ohne es zu fluidisieren, beginnt mit ansteigender Prozessgasgeschwindigkeit an einem definierten Punkt die Fluidisierung. Der in einer Wirbelschicht vorliegende Typ der Fluidisierung hängt im Wesentlichen von Gasgeschwindigkeit, Gasdichte sowie von der Partikelschüttdichte, der Form, und der Korngrößenverteilung der Partikel ab. Gleichzusetzen mit dem Begriff Wirbelschicht ist der Begriff Fließbett, die beiden Begriffe werden in der vorliegenden Anmeldung gleichbedeutend verwendet. Am Fluidisierungspunkt erfolgt der Übergang von einem Festbett zu einem Fließbett.

Der Granulator umfasst Vorrichtungen zur Einleitung von Prozessgas, das dazu dienen soll, ein fluidisiertes Bett beziehungsweise eine Wirbelschicht aus Partikeln zu bilden.

Derartige Wirbelschichtkühlung ist vorteilhaft, weil in einer Wirbelschicht aufgrund der hohen Konvektion und der Volumen/Oberflächenverhältnisse der Partikel schnell viel Wärme in das Prozessgas abgegeben und mit dem Prozessgasstrom abgeführt werden kann. Außerdem wird durch die Bewegung einer Wirbelschicht erreicht, dass frisch eintreffende Partikel - die noch besonders heiß, und damit gegebenenfalls zumindest teilweise weich und klebrig sind und daher zu Agglomeration neigen - nicht an der Oberfläche der Wirbelschicht verweilen, sondern an andere Stellen bewegt beziehungsweise in das Innere der Wirbelschicht eingemischt werden. Dadurch wird die Wahrscheinlichkeit des Aufeinandertreffens und Agglomerierens von mehreren nacheinander an der Oberfläche der Wirbelschicht eintreffenden, Tropfen oder noch heißen, nicht voll erstarrten - und daher klebrigen - Partikeln fast vollständig eliminiert. Agglomerieren der Partikel würde das Wachsen zu größeren, schwereren Partikeln begünstigen, die den Prozess schwerwiegend beeinträchtigen würden.

Trockengranulierung mit Wirbelschichtkühlung bietet die Möglichkeit, die bei der Kühlung der Partikel auf das Prozessgas übertragene Wärme aus dem Prozessgas zurückzugewinnen.

Herkömmliche auf Wirbelschichtkühlung basierende Granulationstechnologien zur Trockengranulierung von schmelzflüssigem Material, wie beispielsweise flüssiger Hochofenschlacke, mit Rotationszerstäubern und Nutzung eines Auftreffens auf die Umhüllung haben einen großen Durchmesser, da zur Vermeidung von Agglomeration flüssiger und/oder teilweise verfestigter Tropfen und/oder vollkommen verfestigter Partikel während des Fluges vom Rotationszerstäuber zu der Umhüllung oder nach Auftreffen auf der Umhüllung der Abstand der - in der Regel rotationssymmetrisch zum Rotationszerstäuber angeordneten, und damit in der Regel im Querschnitt runden - Umhüllung genügend groß gewählt werden muss. Größerer Abstand führt zu einer Auffächerung des vom Rotationszerstäuber ausgehenden Stromes der Tropfen beziehungsweise Partikel, so dass diese weniger nah zueinander fliegen beziehungsweise weniger nah aneinander auftreffen. Das reduziert die Gefahr einer Agglomeration beim Flug beziehungsweise beim Auftreffen. Zur Agglomeration kann es beim Auftreffen beispielsweise kommen, wenn vollständig oder teilweise flüssige Partikel beim Auftreffen deformiert werden und dadurch in Kontakt mit benachbart auftreffenden Partikeln kommen. Da die Partikel nach Auftreffen auf die Umhüllung der Schwerkraft folgend nach unten fallen, beeinflusst die Größe des Auftreffbereichs auch die Fläche der Wirbelschicht, die zumindest unter dem Auftreffbereich bestehen muss. Weiterhin wird die für ein gewünschtes Kühlpotential notwendige Fläche auch dadurch beeinflusst, wie Temperatur und Massenfluss und damit Wärmeeintrag der Partikel in die Wirbelschicht ausgeprägt sind, und welche Gasgeschwindigkeitsbereiche für die Aufrechterhaltung einer Wirbelschicht für die Größenverteilung von Partikeln notwendig sind. Bei begrenzter maximaler Geschwindigkeit des Gasstromes wird beispielsweise für eine gewünschte erhöhte Kühlwirkung eine Vergrößerung der Grundfläche der Wirbelschicht zwecks Vergrößerung der mit maximaler Gasgeschwindigkeit in die Wirbelschicht einbringbaren Gasmenge notwendig sein.

Die Höhe einer Wirbelschicht ist durch den dabei auftretenden Druckverlust des sie von unten nach oben durchströmenden Gases begrenzt. Dieser Druckverlust, durch das Herstellen des Wirbelschichtzustandes beim Durchströmen verursacht, gibt vor, welcher Druck beim Einleiten zur Aufrechterhaltung des für die angestrebte Kühlwirkung notwendigen Gasflusses vorzusehen ist. Je höher der anzulegende Druck, desto höher der Energieverbrauch zum Einleiten des Gases. Je höher die Wirbelschicht, desto größer der Druckverlust. Auch bauliche Gegebenheiten können die realisierbare Höhe der Wirbelschicht begrenzen.

Infolgedessen ist bei herkömmlichen auf Wirbelschichtkühlung basierenden Granulationstechnologien zur Trockengranulierung von schmelzflüssigem Material - wie beispielsweise Hochofenschlacke - mit Rotationszerstäubern das Verhältnis Grundfläche zu Höhe relativ groß im Vergleich zu anderen Wirbelschichten zum Wärme- und/oder Stoffaustausch nutzenden Verfahren wie beispielsweise FINEX®-Wirbelschichtreduktion.

Bei großer Grundfläche und gleichzeitig geringer Höhe der Wirbelschicht ergeben sich bei so einer Trockengranulierung jedoch Probleme. Beispielsweise kann es zu lokalem Zusammenbruch der Wirbelschicht kommen infolge von Inhomogenitäten im Granulationsprozess, die beispielsweise bezüglich des Querschnitts der Wirbelschicht nichtrotationssymmetrische Verteilung der von der Umhüllung herabfallenden Partikel bewirken; zur Bildung von Hotspots infolge von schlechter horizontaler Vermischung aufgrund schwacher diesbezüglicher Turbulenzen in der Wirbelschicht; zu ungleichmäßiger Fluidisierung, speziell beim Anfahren der Wirbelschicht. Solche Probleme können Agglomeration stark begünstigen, weil es zu lokaler Anhäufung von Tropfen oder heißen, klebrigen Partikeln kommen kann, die nicht schnell zu vollständiger Erstarrung gekühlt werden. Zu große Agglomerate können die Aufrechterhaltung der Wirbelschicht beeinträchtigen und einen Betriebsstopp zu ihrer Entfernung erfordern. Zur Vermeidung von Problemen aufgrund ungleichmäßiger Fluidisierung wird bisher die Prozessgaszufuhr - beziehungsweise die Luftzufuhr bei Verwendung von Luft als Fluidisierungs- beziehungsweise Kühlgas - zur Wirbelschicht mit einem Druck versehen, der auch in schlecht fluidisierten Bereichen noch ausreichend starke Ausprägung der Wirbelschicht erlaubt. Ungünstig ist dabei, dass dabei gut fluidisierte Bereiche mit einem Druck über dem bei ihnen benötigten Druck versorgt werden - das führt zu höherem Energieverbrauch für die druckerzeugenden Aggregate und vermindert den Spielraum, den Gasfluss durch die Wirbelschicht zu variieren. Es erhöht auch die durch diese Bereiche geleitete Prozessgasmenge, was für Wärmerückgewinnung aus dem Prozessgas aufgrund tieferer Temperatur ungünstig ist.

### Zusammenfassung der Erfindung

### Technische Aufgabe

Es ist daher eine Aufgabe der vorliegenden Erfindung, Vorrichtung und Verfahren vorzustellen, die solche Probleme zumindest teilweise vermindern oder lösen.

### Technische Lösung

Diese Aufgabe wird gelöst durch ein
Verfahren zur Trockengranulierung von schmelzflüssigem Material, wobei aus diesem erzeugte Partikel in zumindest einer Wirbelschicht mittels Prozessgas gekühlt werden, dadurch gekennzeichnet, dass zumindest in derjenigen Wirbelschicht, in welche die Partikel direkt nach ihrer Erzeugung eintreten, die Zuführung des Prozessgases in die Wirbelschicht in mehreren separaten Zonen erfolgt.

Das schmelzflüssige Material stammt aus einem oder mehreren mineralogischen Verfahren - wie der Herstellung einer Gesteinsschmelze in einem Kupolofen für die Erzeugung von Mineralwolle, auch Steinwolle genannt - und/oder aus einem - oder mehreren - metallurgischen Verfahren. Bevorzugt ist das schmelzflüssige Material schmelzflüssige metallurgische Schlacke - also Schlacke aus einem metallurgischen Verfahren. Es können auch Mischungen verschiedener Typen von Schlacke sein. Konkret handelt es sich beispielsweise um Hochofenschlacke, Stahlwerksschlacke wie Konverterschlacke oder Lichtbogenofenschlacke. Bevorzugt ist es Schlacke aus der Erzeugung von Roheisenschmelze - beispielsweise mittels Schmelzreduktionsverfahren wie beispielsweise COREX® oder FINEX® oder Hochofenverfahren -, besonders bevorzugt Hochofenschlacke.

Im Zuge der Trockengranulierung werden aus dem schmelzflüssigen Material Partikel erzeugt. Die Erzeugung von Partikeln aus dem schmelzflüssigen Material erfolgt mittels einer Zerstäubereinheit, bevorzugt mittels Rotationszerstäuber. Zerstäuben bedeutet in diesem Zusammenhang die Generierung von Partikeln aus dem schmelzflüssigen Material. Ein Rotationszerstäuber basiert auf dem Prinzip, dass flüssiges Material auf einen rotierenden Körper aufgegeben wird, die Rotation von dem rotierenden Körper auf die Flüssigkeit übertragen wird, und sich von der Flüssigkeit fliehkraftbedingt Tropfen lösen, die Flüssigkeit also zerstäubt wird.

Der Begriff Partikel umfasst dabei flüssige Tropfen, teilerstarrte - also teilweise flüssig und teilweise fest; beispielsweise außen fest und innen flüssig - Partikel, vollerstarrte Partikel. Flüssige, teilerstarrte und vollerstarrte Partikel können eine Klebrigkeit aufweisen -. Klebrigkeit bezieht sich dabei auf das Vermögen, mit anderen bei der Trockengranulierung erzeugten Partikeln zusammenzuhaften beziehungsweise zu agglomerieren.

Die Partikel entstehen aus schmelzflüssigem Material. Schmelzflüssiges Material hat eine Temperatur oberhalb seines Schmelzpunktes, die Partikel enthalten entsprechend im Vergleich zum festen Zustand mehr Wärmeenergie. Durch die Kühlung sollen die Partikel so weit erstarren, dass keine für den Betrieb der Wirbelschicht relevante Agglomerationsneigung infolge Klebrigkeit mehr besteht.

Trockengranulierung bedeutet in diesem Zusammenhang, dass das schmelzflüssige Material bei der Granulierung nicht in direkten Kontakt mit flüssigem Wasser kommt. Flüssiges Wasser kann jedoch indirekt zur Kühlung beitragen, beispielsweise wenn die Umhüllung des Granulators wassergekühlt ausgeführt ist.

Die bei der Trockengranulierung erzeugten Partikel werden in zumindest einer Wirbelschicht mittels Prozessgas gekühlt. Es kann also in einer Wirbelschicht gekühlt werden, oder in mehreren Wirbelschichten; im Falle mehrerer Wirbelschichten werden diese von den Partikeln nacheinander durchlaufen. Zuführung des Prozessgases in die Wirbelschicht in mehreren separaten Zonen kann in einer, einigen oder allen dieser Wirbelschichten erfolgen.

Die Kühlung erfolgt, da für intensiven Wärmeaustausch eine Wirbelschicht gebildet soll, mittels Gases, hier auch genannt Prozessgas. Bevorzugt wird Luft als Prozessgas verwendet, da leicht verfügbar, hier auch Prozessluft genannt. Die Wirbelschicht ist beispielsweise eine turbulente Wirbelschicht oder eine stoßende Wirbelschicht.

Erfindungsgemäß wird das Prozessgas zumindest derjenigen Wirbelschicht, in welche die Partikel direkt nach ihrer Erzeugung eintreten, in mehreren separaten Zonen in die Wirbelschicht zugeführt. Damit ist die erste Wirbelschicht gemeint, in die die Partikel nach ihrer Entstehung eintreten; die Formulierung direkt nach ihrer Entstehung schließt mit ein, dass nach der Entstehung noch andere Vorgänge stattfinden, bevor die Partikel erstmals in eine Wirbelschicht eintreten - beispielsweise Auftreffen auf die Umhüllung, bevor sie von der Umhüllung herab in die Wirbelschicht fallen. Im Gegensatz zu einer bisher üblichen einzigen Zuführung, also Zuführung in einer einzigen Zone, - beispielsweise ein Verteilblech am Boden des die Wirbelschicht umfassenden Gefäßes, durch das Gas aus einer einzigen Zuführung - und damit mit einem einzigen Druck - zugeführt wird - erfolgt die Zuführung nicht in einer einzigen Zone, sondern in mehreren Zonen. Die separaten Zonen grenzen aneinander an und decken insgesamt die gesamte Grundfläche der Wirbelschicht ab. Bei herkömmlicher Zuführung in einer einzigen Zone wird die Grundfläche der Wirbelschicht durch diese einzige Zone abgedeckt.

Erfindungsgemäß wird in zumindest zwei Zonen zugeführt, bevorzugt in zumindest drei Zonen, besonders bevorzugt zumindest vier Zonen. Es kann beispielsweise in zwei Zonen oder in drei Zonen oder in 4 Zonen oder in fünf Zonen oder in sechs Zonen oder in sieben Zonen oder in acht Zonen oder in neun Zonen oder in zehn Zonen oder in mehr als zehn Zonen zugeführt werden.

### Vorteilhafte Wirkungen der Erfindung

Die erfindungsgemäße Zuführung des Prozessgases in die Wirbelschicht in mehreren separaten Zonen ermöglicht es, zonenweise verschiedene Bedingungen einzustellen; beispielsweise per Steuerung und/oder Regelung. Beispielsweise kann in verschiedenen Zonen verschiedener Druck für das zugeführte Prozessgas gewählt werden. Beispielsweise kann in verschiedenen Zonen der Volumenfluss - also das pro Zeiteinheit der Wirbelschicht zugeführte Volumen Prozessgas - verschieden gewählt werden. Beispielsweise können Druck und/oder Volumenfluss zonenweise, gegebenenfalls unabhängig von anderen Zonen, verändert werden. Im Gegensatz zu herkömmlicher Zuführung in einer einzigen Zone ist damit die Möglichkeit gegeben, jede Zone optimal hinsichtlich ihrer Bedürfnisse beispielsweise bezüglich Druckes und/oder Volumenfluss mit Prozessgas zu versorgen - beispielsweise energieoptimal. Unterschiede zwischen verschiedenen Bereichen der Wirbelschicht bezüglich der Fluidisierung können durch entsprechende zonenweise Änderungen automatisch durch das Kontrollsystem oder durch manuelle Änderung der Parameter durch das Bedienpersonal ausgeglichen beziehungsweise hervorgerufen werden.

Beispielsweise kann ein, beispielsweise zeitweises, Hervorrufen von Unterschieden bezüglich Druckes und/oder Volumenfluss gewünscht sein, um Unterschiede der Betthöhe der Wirbelschicht zwischen verschiedenen Bereichen auszugleichen; solche Unterschiede können beispielsweise infolge unsymmetrisch verteilten Auftreffens auf die Umhüllung und entsprechend unsymmetrisch verteilten Herabfallens in die Wirbelschicht auftreten.

Beispielsweise kann ein, beispielsweise zeitweises, Hervorrufen von Unterschieden bezüglich Druckes und/oder Volumenfluss gewünscht sein, um Unterschiede der Temperatur in der Wirbelschicht zwischen verschiedenen Bereichen auszugleichen; solche Unterschiede können beispielsweise infolge unsymmetrisch verteilten Auftreffens auf die Umhüllung und entsprechend unsymmetrisch verteilten Herabfallens in die Wirbelschicht auftreten.

Beispielsweise kann ein, beispielsweise zeitweises, Hervorrufen von Unterschieden bezüglich Druckes und/oder Volumenfluss gewünscht sein, um Unterschiede im Ausmaß der Fluidisierung in der Wirbelschicht zwischen verschiedenen Bereichen auszugleichen.

Beispielsweise kann ein, beispielsweise zeitweises, Hervorrufen von Unterschieden bezüglich Druckes und/oder Volumenfluss gewünscht sein, um in nur einem Bereich am Boden der Wirbelschicht abgesetzte Agglomerate in fluidisierten Zustand zu bringen.

Beispielsweise kann ein, beispielsweise zeitweises, Hervorrufen von Unterschieden bezüglich Druckes gewünscht sein, um gleichmäßige Prozessgasverteilung in allen Bereichen der Wirbelschicht herzustellen; eine ungleichmäßige Luftverteilung kann beispielsweise durch Blockade von einzelnen Öffnungen zur Zufuhr von Prozessgas hervorgerufen werden, und/oder durch unterschiedliche Partikelgrößenverteilung in der Wirbelschicht infolge unsymmetrisch verteilten Auftreffens auf die Umhüllung und entsprechend unsymmetrisch verteilten Herabfallens in die Wirbelschicht in Verbindung mit schlechter horizontaler Durchmischung der Wirbelschicht.

Zonenweise Einstellbarkeit bietet auch den Vorteil, dass eine Erhöhung der Prozessgasmenge zur Behebung von Unregelmäßigkeiten begrenzt wird, was für die Erzielung einer möglichst hohen Temperatur des den Granulator verlassenden Prozessabgases vorteilhaft ist. Wärmerückgewinnung aus diesem Prozessabgas ist bei höherer Temperatur effizienter. Somit wird auch beim Betrieb von Wirbelschichten mit großer Grundfläche und sich daraus ergebenden großen Prozessgasmengen Energierückgewinnung aus dem Prozessabgas effizient und wirtschaftlich sinnvoll möglich.

Die Zuführung des Prozessgases in die Wirbelschicht erfolgt in mehreren separaten Zonen, vorzugsweise ist die Wirbelschicht selber jedoch nicht durch Vorrichtungen wie beispielsweise Wände in Teilwirbelschichten, die zusammen die Wirbelschicht der Vorrichtung zum Trockengranulierung ergeben, unterteilt - dabei wäre beispielsweise Vermischung gehemmt, und Partikel könnten festkleben. Es liegt also eine Wirbelschicht vor, bei der Zuführung von Prozessgas in mehreren separaten Zonen erfolgt.

Nach einer bevorzugten Ausführungsform wird bei dem Verfahren der Volumenfluss und/oder Druck des Prozessgases in zumindest zwei Zonen unabhängig von anderen Zonen gesteuert und/oder geregelt.

Dadurch ist eine Anpassung an lokale Bedürfnisse in der Wirbelschicht erleichtert.

Mit dem Druck des Prozessgases ist der Druck gemeint, unter dem das Prozessgas bei der Lieferung zur Wirbelschicht steht.

Nach einer bevorzugten Ausführungsform wird bei dem Verfahren die Höhe der Wirbelschicht über, bevorzugt senkrecht über, zumindest zwei Zonen bestimmt.

Damit können lokale Unterschiede festgestellt werden; darauf basierend können gegebenenfalls Gegenmaßnahmen ergriffen werden. Die Bestimmung kann direkt - durch Höhenmessung - oder indirekt - durch Berechnung aus andersartigen Messgrößen - erfolgen. Die Höhe der Wirbelschicht in einem Bereich wird beispielsweise basierend auf Druckmessung in der Wirbelschicht, beispielsweise am Boden der Wirbelschicht, in diesem Bereich bestimmt.

Nach einer bevorzugten Ausführungsform wird bei dem Verfahren die Temperatur in der Wirbelschicht über, bevorzugt senkrecht über, zumindest zwei Zonen bestimmt. Die Bestimmung kann direkt - durch Temperaturmessung - oder indirekt - durch Berechnung aus andersartigen Messgrößen - erfolgen. Die Temperatur der Wirbelschicht in einem Bereich wird beispielsweise basierend auf Messungen mit Thermoelement oder mit Widerstandsthermometer bestimmt. Das gibt beispielsweise Aufschluss über Kühlbedarf in diesem Bereich der Wirbelschicht beziehungsweise über die Gefahr von Agglomeration aufgrund hitzebedingter Viskosität beziehungsweise Klebrigkeit der Partikel.

Nach einer bevorzugten Ausführungsform wird bei dem Verfahren die Intensität der Wirbelschicht über, bevorzugt senkrecht über, zumindest einer der Zonen bestimmt. Die Bestimmung kann beispielsweise auf Basis von Messungen des Drucks in der Wirbelschicht, bevorzugt am Boden der Wirbelschicht, beziehungsweise Auswertung des zeitlichen Verlaufs der Druckentwicklung erfolgen. Das gibt beispielsweise Aufschluss über Ungleichmäßigkeiten der Wirbelschicht und der Durchmischung, und der damit verbundenen Gefahr der Bildung von Hot Spots beziehungsweise von Agglomerationen beziehungsweise Abweichung von gewünschten Eigenschaften des Granulats wie beispielsweise Schüttdichte und Korngrößenverteilung. Mit Intensität der Wirbelschicht ist der zeitliche Verlauf des Drucks in der Wirbelschicht gemeint. Beispielsweise ist bei starker Schwankung des Druckes um einen zeitlichen Mittelwert von einer hohen Intensität zu sprechen, beziehungsweise bei geringer Schwankung von niedriger Intensität.

Die Regelung beziehungsweise Steuerung kann beispielsweise so erfolgen, dass an einzelnen Messstellen zur Bestimmung von Höhe beziehungsweise Temperatur beziehungsweise Intensität - beziehungsweise anderen Parametern - Abweichungen von Durchschnittswerten oder Vorgaben für diese Parameter infolge Monitorings wahrgenommen werden. Auf der Basis kann beispielsweise der Volumenfluss des Prozessgases in einer Zone erhöht werden, wenn die Temperatur in der Wirbelschicht über dieser Zone zu hoch liegt, beziehungsweise bei zu tiefer Temperatur der Volumenfluss vermindert werden. Es kann auch der Volumenfluss des Prozessgases in einer Zone erhöht werden, wenn die Höhe der Wirbelschicht über dieser Zone zu groß ist, dabei wird ein Zuviel an Partikeln durch erhöhte Durchmischung aus dem Bereich wegtransportiert, beziehungsweise bei zu geringer Höhe der Volumenfluss vermindert werden. Es kann auch der Volumenfluss des Prozessgases in einer Zone erhöht werden, wenn die Intensität der Wirbelschicht über dieser Zone zu gering ist, beziehungsweise bei zu großer Intensität der Volumenfluss vermindert werden.

Die bei der Trockengranulierung erzeugten Partikel werden in zumindest einer Wirbelschicht mittels Prozessgas gekühlt. Es kann also in einer Wirbelschicht gekühlt werden, oder in mehreren Wirbelschichten; im Falle mehrerer Wirbelschichten werden diese von den Partikeln nacheinander durchlaufen.

Nach einer vorteilhaften Ausführungsform des erfindungsgemäßen Verfahrens erfolgt stufenweise Kühlung auf eine Endtemperatur zuerst in derjenigen Wirbelschicht, in welche die Partikel direkt nach ihrer Erzeugung eintreten, auf eine Primärkühltemperatur, und nachfolgend in zumindest einer weiteren Wirbelschicht auf die Endtemperatur.

Nach einer von vielen möglichen Ausführungsformen erfolgt zumindest in einer der weiteren Wirbelschichten Zuführung von Prozessgas in mehreren separaten Zonen - also analog zur Zuführung in die diejenige Wirbelschicht, in welche die Partikel direkt nach ihrer Erzeugung eintreten.

Die weitere beziehungsweise die weiteren Wirbelschichten können zu derjenigen Wirbelschicht, in welche die Partikel direkt nach ihrer Erzeugung eintreten, bezüglich Zuführung beziehungsweise Fluss des Prozessgases seriell oder parallel angeordnet sein. Auch eine Kombination von serieller und paralleler Anordnung ist möglich.

Die Wirbelschicht, in welche die Partikel direkt nach ihrer Erzeugung eintreten, wird hier auch als Primärwirbelschicht bezeichnet. Bei Entnahme aus dieser Wirbelschicht haben die Partikel die sogenannten Primärkühltemperatur.

In einer oder mehreren weiteren Wirbelschichten werden die Partikel weiter abgekühlt auf eine bei Entnahme aus der letzten Wirbelschicht vorliegende Endtemperatur.

Die Partikel werden aus der Primärwirbelschicht entnommen und in eine weitere Wirbelschicht - genannt erste

Folgewirbelschicht - eingegeben. Die Temperatur der Partikel bei der Entnahme aus der Folgewirbelschicht ist die erste Folgetemperatur. Falls nach Entnahme aus der ersten Folgewirbelschicht nicht in eine weitere Wirbelschicht eingegeben wird, ist die erste Folgetemperatur die Endtemperatur. Falls nach Entnahme aus der Folgewirbelschicht in eine weitere Wirbelschicht - genannt zweite Folgewirbelschicht - eingegeben wird, haben die Partikel nach Kühlung in der zweiten Folgewirbelschicht bei Entnahme aus der zweiten Folgewirbelschicht die zweite Folgetemperatur. Falls nach Entnahme aus der zweiten Folgewirbelschicht nicht in eine weitere Wirbelschicht eingegeben wird, ist die zweite Folgetemperatur die Endtemperatur. Entsprechend ist im Fall von Eingabe in noch eine oder mehrere weitere Wirbelschichten wie dritte Folgewirbelschicht, vierte Folgewirbelschicht, fünfte Folgewirbelschicht die Endtemperatur die bei Entnahme aus der bezüglich des Kühlprozesses letzten Wirbelschicht vorliegende Temperatur.

Es kann eine weitere Wirbelschicht genutzt werden, oder zwei, oder drei, oder vier, oder fünf, oder sechs weitere Wirbelschichten, oder mehr als sechs weitere Wirbelschichten.

Auf diese Weise kann eine unter der Primärkühltemperatur liegende Endtemperatur erreicht werden, ohne den Volumenfluss des Prozessgases durch die Primärwirbelschicht zu erhöhen. Das erlaubt aufgrund höherer Temperatur des aus der Primärwirbelschicht abgeführten Prozessabgases eine effizientere Wärmerückgewinnung aus diesem Prozessabgas, und es erlaubt einfachere Handhabbarkeit der Partikel aufgrund ihrer unter der Primärkühltemperatur liegenden Temperatur. Nach einer vorteilhaften Ausführungsform umfasst das derjenigen Wirbelschicht, in welche die Partikel direkt nach ihrer Erzeugung eintreten, zugeführte Prozessgas Prozessabgas aus zumindest einer der weiteren Wirbelschichten. Dabei kann das Prozessabgas, das zur Zuführung vorgesehen ist, vor der Zuführung auch gereinigt und/oder gekühlt werden.

Das derjenigen Wirbelschicht, in welche die Partikel direkt nach ihrer Erzeugung eintreten, zugeführte Prozessgas enthält in diesem Fall bereits den Partikeln in der(n) weiteren Wirbelschicht(en) entzogene Wärme. Daher wird das Prozessabgas aus dieser Wirbelschicht eine höhere - im Vergleich zu Einleitung von Prozessgas, das den Partikeln noch keine Wärme entzogen hat, also eine sogenannte Prozessgasgrundtemperatur aufweist - Temperatur aufweisen. Das erlaubt effizientere Wärmerückgewinnung aus diesem Prozessabgas. In Anlehnung an die oben eingeführten Bezeichnungen kann das Prozessabgas derjenigen Wirbelschicht, in welche die Partikel direkt nach ihrer Erzeugung eintreten - also der Primärwirbelschicht -, als Primärabgas bezeichnet werden. Entsprechend kann das Prozessabgas aus der ersten Folgewirbelschicht als erstes Folgeprozessabgas bezeichnet werden; für weitere Folgewirbelschichten analog.

Der Primärwirbelschicht zugeführtes Prozessgas umfasst nach dieser Ausführungsform also Prozessabgas aus zumindest einer der weitere Folgewirbelschichten. Es kann auch aus so einem Prozessabgas bestehen.

Damit kann eine höhere Temperatur von für Wärmerückgewinnung vorgesehenes Prozessabgas und eine niedrigere Endtemperatur des Granulats erreicht werden als bei alleiniger Nutzung von Primärprozessabgas beziehungsweise einer Nutzung von Prozessabgas aus nur einer Wirbelschicht. Das erlaubt effizientere Wärmerückgewinnung.

Nach einer vorteilhaften Ausführungsform wird Prozessabgas aus derjenigen Wirbelschicht, in welche die Partikel direkt nach ihrer Erzeugung eintreten, nach Vermischung gemeinsam mit zumindest einer Teilmenge des Prozessabgas aus zumindest einer der weiteren Wirbelschichten abgeleitet. Bevorzugt ist es, gemeinsam mit zumindest einer Teilmenge des Prozessabgases aller weiteren Wirbelschichten abzuleiten; besonders bevorzugt ist es, gemeinsam mit den gesamten Prozessabgasen aller weiteren Wirbelschichten abzuleiten.

Damit kann eine höhere Temperatur von für Wärmerückgewinnung vorgesehenes Prozessabgas und eine niedrigere Endtemperatur des Granulats erreicht werden als bei alleiniger Nutzung von Primärprozessabgas beziehungsweise einer Nutzung von Prozessabgas aus nur einer Wirbelschicht. Das erlaubt effizientere Wärmerückgewinnung.

Vorzugsweise wird den diese gemeinsam abgeleiteten Prozessabgase liefernden Wirbelschichten das gleiche Prozessgas zugeführt; beispielsweise Luft mit Umgebungstemperatur oder gekühlte Luft, beispielsweise Luft mit einer Temperatur von 0°C.

Durch die erfindungsgemäße Verfahrensführung kann eine Wirbelschicht mit einem großen Verhältnis Grundfläche zu Höhe gut gehandhabt werden; Betrieb einer Trockengranulierung von schmelzflüssiger Schlacke unter ungünstigen Verhältnissen wird dadurch auch bei durch räumliche Verhältnisse eingeschränkten Bedingungen erleichtert beziehungsweise ermöglicht. Außerdem wird durch die erfindungsgemäße Verfahrensführung eine erhöhte Effizienz der Wärmerückgewinnung aus Prozessabgas ermöglicht. Ein weiterer Gegenstand der Erfindung ist ein Granulator umfassend innerhalb einer Umhüllung des Granulators eine Zerstäubereinheit, eine Zufuhreinrichtung zur Zufuhr von schmelzflüssigem Material zur Zerstäubereinheit, zumindest einen Wirbelschichtraumbereich mit einer Gaszuführung für Prozessgas, und zumindest eine Gasableitung für Prozessabgas aus dem Wirbelschichtraumbereich,
dadurch gekennzeichnet, dass
zumindest für den Wirbelschichtraumbereich, der zum Eintritt von Partikeln direkt nach ihrer Erzeugung mittels Zerstäubereinheit geeignet ist, die Gaszuführung mehrere Zufuhrzonen aufweist.

Der Granulator ist eine Vorrichtung zur Trockengranulierung von schmelzflüssigem Material.

Der Granulator ist ein durch eine Umhüllung begrenzt.

Die Zerstäubereinheit dient zum Zerstäuben des schmelzflüssigen Materials. Zerstäuben bedeutet in diesem Zusammenhang die Generierung von Partikeln aus dem schmelzflüssigen Material.

Ein Wirbelschichtraumbereich ist ausgeführt zur Ausbildung einer Wirbelschicht aus von der Zerstäubereinheit aus dem schmelzflüssigen Material gebildeten Partikeln mit Gas - dieses Gas ist für die jeweilige Wirbelschicht Prozessgas; es kann sich bei dem Prozessgas für eine Wirbelschicht auch um Prozessabgas aus einer anderen Wirbelschicht handeln.

Der Wirbelschichtraumbereich ist geeignet zur Kühlung der Partikel mittels Prozessgas.

Es ist zumindest ein Wirbelschichtraumbereich vorhanden, es können auch mehrere Wirbelschichtraumbereiche vorhanden sein. Zumindest ein Wirbelschichtraumbereich, bevorzugt nur ein Wirbelschichtraumbereich, ist geeignet zum Eintritt von Partikeln direkt nach ihrer Erzeugung mittels

Zerstäubereinheit. Zumindest für denjenigen Wirbelschichtraumbereich, der zum Eintritt von Partikeln direkt nach ihrer Erzeugung mittels Zerstäubereinheit geeignet ist, weist die Gaszuführung mehrere Zufuhrzonen auf; die Zufuhrzonen sind voneinander separiert. Sie dienen dazu, Prozessgas in mehreren separaten Zonen in den Wirbelschichtraumbereich zuzuführen.

Der Granulator umfasst eine Vorrichtung zum Steuern und/oder Regeln des Volumenfluss des Prozessgases. Vorzugsweise umfasst der Granulator eine Vorrichtung zum voneinander unabhängigen Steuern und/oder Regeln des Volumenfluss und/oder des Druckes des Prozessgases in zumindest zwei Zonen; damit sind zwei Zonen gemeint, die in denselben Wirbelschichtraumbereich Prozessgas zuführen.

Vorzugsweise umfasst der Granulator eine Vorrichtung zur Bestimmung der Höhe einer im Betrieb in dem Wirbelschichtraumbereich ausgebildeten Wirbelschicht über zumindest zwei Zufuhrzonen. Diese Vorrichtung umfasst beispielsweise einen Druckmesser.

Vorzugsweise umfasst der Granulator eine Vorrichtung zur Bestimmung der Temperatur einer im Betrieb in dem Wirbelschichtraumbereich ausgebildeten Wirbelschicht über zumindest zwei Zufuhrzonen. Diese Vorrichtung umfasst beispielsweise ein Thermoelement und/oder ein Widerstandsthermometer.

Vorzugsweise umfasst der Granulator eine Vorrichtung zur Bestimmung der Intensität einer im Betrieb in dem Wirbelschichtraumbereich ausgebildeten Wirbelschicht über zumindest einer Zufuhrzone. Diese Vorrichtung umfasst beispielsweise einen Druckmesser.

Vorzugsweise umfasst der Granulator mehrere Wirbelschichtraumbereiche. Er kann zwei, oder drei, oder vier, oder fünf, oder sechs, oder sieben Wirbelschichtraumbereiche umfassen, oder mehr als sieben Wirbelschichtraumbereiche. Der weitere beziehungsweise die weiteren Wirbelschichtraumbereiche können zu demjenigen Wirbelschichtraumbereich, der zum Eintritt von Partikeln direkt nach ihrer Erzeugung mittels Zerstäubereinheit geeignet ist, bezüglich Zuführung beziehungsweise Fluss des Prozessgases seriell oder parallel angeordnet sein. Auch eine Kombination von serieller und paralleler Anordnung ist möglich.

Nach einer Variante weist die Gaszuführung für den Wirbelschichtraumbereich, der zum Eintritt von Partikeln direkt nach ihrer Erzeugung mittels Zerstäubereinheit geeignet ist, zumindest eine Mündung einer Gasableitung aus zumindest einem anderen Wirbelschichtraumbereich auf.

Nach einer Variante weist die Gasableitung des Wirbelschichtraumbereiches, der zum Eintritt von Partikeln direkt nach ihrer Erzeugung mittels Zerstäubereinheit geeignet ist, zumindest eine Mündung einer Gasableitung aus zumindest einem anderen Wirbelschichtraumbereich auf.

Nach einer Variante gehen die Gaszuführungen zu diesen Wirbelschichtraumbereichen von einer einzigen Gasspeiseleitung aus - sie entspringen also einer gemeinsamen Gasspeisleitung. Prinzipiell können Sie auch von verschiedenen Gasspeisleitungen ausgehen.

Selbstverständlich umfasst der Granulator auch eine oder mehrere Entnahmevorrichtungen zur Entnahme von im Betrieb gebildetem Granulat aus den Wirbelschichtraumbereichen.

Ein weiterer Gegenstand der vorliegenden Anmeldung ist eine Signalverarbeitungseinrichtung mit einem maschinenlesbaren Programmcode, dadurch gekennzeichnet, dass er Steuer und/oder Regelbefehle zur Durchführung eines erfindungsgemäßen Verfahrens aufweist. Bei einem weiteren Gegenstand handelt es sich um eine Signalverarbeitungseinrichtung zur Durchführung eines erfindungsgemäßen Verfahrens.

Ein weiterer Gegenstand der vorliegenden Anmeldung ist ein maschinenlesbarer Programmcode für eine Signalverarbeitungseinrichtung, dadurch gekennzeichnet, dass der Programmcode Steuer und/oder Regelbefehle aufweist, welche die Signalverarbeitungseinrichtung zur Durchführung eines erfindungsgemäßen Verfahrens veranlassen. Bei einem weiteren Gegenstand handelt es sich um ein Computerprogrammprodukt umfassend Befehle für eine Signalverarbeitungseinrichtung, die bei der Ausführung des Programms für die Signalverarbeitungsvorrichtung diese veranlassen, ein erfindungsgemäßes Verfahren durchzuführen.

Ein weiterer Gegenstand der vorliegenden Anmeldung ist ein Speichermedium mit einem darauf gespeicherten erfindungsgemäßen maschinenlesbaren Programmcode. Bei einem weiteren Gegenstand handelt es sich um ein Speichermedium mit einem darauf gespeicherten Computerprogramm zur Durchführung eines erfindungsgemäßen Verfahrens.

Ein weiterer Gegenstand der vorliegenden Anmeldung ist ein Computerprogrammprodukt, welches ein Programm umfasst und direkt in einen Speicher eines Granulators ladbar ist, mit Programm-Mitteln, um den Granulator entsprechend einem erfindungsgemäßen Verfahren zu regeln und/oder steuern, wenn das Programm von der Regeleinrichtung und/oder Steuereinrichtung ausgeführt wird.

### Kurze Beschreibung der Zeichnungen

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben. Dabei zeigt:
- Fig. 1: eine schematische Seitenansicht eines Schnittes durch einen erfindungsgemäßen Granulator.
- Fig. 2: eine schematische Ansicht zu Figur 1 von oben mit Darstellung von Einrichtungen zum Steuern und/oder Regeln.
- Fig. 3: ein Blockfließbild einer seriellen Wirbelschichtanordnung.
- Fig. 4: ein Blockfließbild für eine parallele Wirbelschichtanordnung.

### Beschreibung der Ausführungsformen

### Beispiele

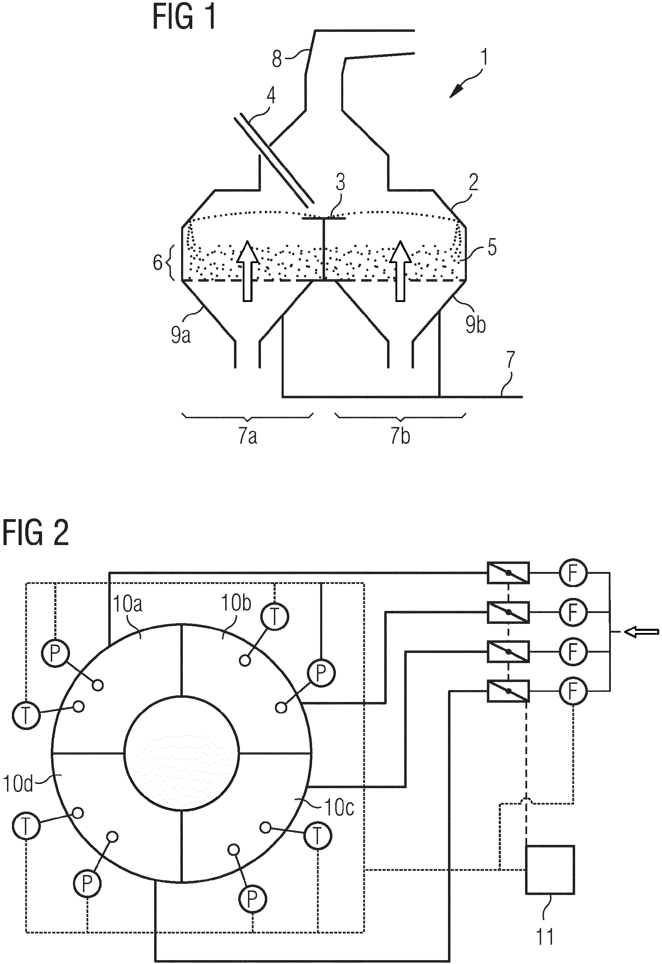

Figur 1 zeigt schematisch eine Seitenansicht eines Schnittes durch einen erfindungsgemäßen Granulator 1. Der Granulator 1 hat eine Umhüllung 2; in der gezeigten Variante sind die Bereiche der Umhüllung, auf die Partikel auftreffen, wassergekühlt. Im Granulator 1 ist eine Zerstäubereinheit 3, beispielsweise ein Rotationszerstäuber, angeordnet. Über eine Zufuhreinrichtung 4 zur Zufuhr von schmelzflüssigem Material zur Zerstäubereinheit 3 wird schmelzflüssiges Material, beispielsweise Hochofenschlacke, zugeführt. Strichliert dargestellt sind ein Strom von mittels Zerstäubereinheit 3 erzeugten Partikeln, der auf die Umhüllung trifft sowie von der Umhüllung herabfallende Partikel. Die herabfallenden Partikel fallen in eine Wirbelschicht 5 - dargestellt durch Punkte -, die sich in der gezeigten Variante symmetrisch um die Zerstäubereinheit 3 herum erstreckt. Die Wirbelschicht 5 bildet sich im dargestellten Betriebszustand in einem Wirbelschichtraumbereich 6 des Granulators 1. Dargestellt ist die Wirbelschicht 5, in welche die Partikel direkt nach ihrer Erzeugung eintreten. Dem Wirbelschichtraumbereich 6 beziehungsweise der Wirbelschicht 5 wird mit einer Gaszuführung 7 Prozessgas, im dargestellten Fall Prozessluft mit Umgebungstemperatur, zugeführt. Die Gaszuführung weist mehrere Zufuhrzonen 7a,7b auf; die Zuführung des Prozessgases - dargestellt mit Blockpfeilen - in die Wirbelschicht 5 erfolgt also in mehreren separaten Zonen. Prozessabgas aus dem Wirbelschichtraumbereich 6 wird über die Gasableitung 8 aus dem Granulator 1 ausgeleitet. Der Granulataustrag 9a und 9b erfolgt entgegen der Prozessgasführung an mehreren Stellen unter der Wirbelschicht.

Figur 2 zeigt schematisch einen Blick von oben auf einen Granulator 1 wie in Figur 1. Zu sehen sind 4 separate Zonen 10a,10b,10c,10d in denen Prozessgas in die nicht extra dargestellte Wirbelschicht in vier Zufuhrzonen zugeführt wird, und eine Vorrichtung zum Steuern und/oder Regeln 11 des Volumenfluss F des Prozessgases; das Steuern und/oder Regeln erfolgt im dargestellten Beispiel in allen Zonen unabhängig von anderen Zonen.

Vorrichtungen zur Bestimmung der Höhe der Wirbelschicht über den Zonen 10a,10b,10c,10d sind vorhanden und als Druckmesser P ausgeführt; die Druckmesser dienen auch als Komponenten von Vorrichtungen zur Bestimmung der Intensität über den Zonen 10a,10b,10c,10d - gegebenenfalls erfolgt die Bestimmung in Verbindung mit der Vorrichtung zum Steuern und/oder Regeln 11. Vorrichtungen zur Bestimmung der Temperatur der Wirbelschicht über den Zonen 10a,10b,10c,10d sind vorhanden und als Thermoelemente T und/oder Widerstandsthermometer ausgeführt. Zugeführtes Prozessgas ist mit einem Blockpfeil angedeutet.

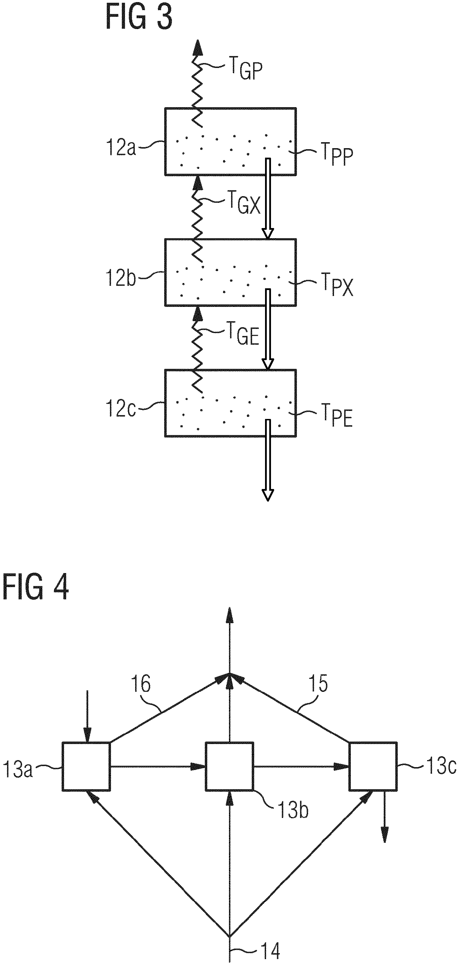

Figur 3 zeigt schematisch eine Anordnung mit mehreren Wirbelschichtraumbereichen 12a, 12b, 12c bezüglich Prozessgasfluss seriell angeordnet. Kühlung auf eine Partikelprimärkühltemperatur T_{PP} erfolgt zuerst im Wirbelschichtraumbereich 12a in derjenigen Wirbelschicht, in welche die Partikel - dargestellt ist der Partikelstrom durch gerade Pfeile - direkt nach ihrer Erzeugung eintreten, also der Primärwirbelschicht. Nachfolgend erfolgt in den weiteren Wirbelschichten beziehungsweise Folgewirbelschichten in den Wirbelschichtraumbereichen 12b, 12c Kühlung auf die intermediäre Temperatur T_{PX} und schließlich auf die Partikelendtemperatur T_{PE}. Prozessabgas aus der Primärwirbelschicht - dargestellt ist der Prozessgasstrom durch gezackte Pfeile - hat die Temperatur T_{GP}. Prozessabgas aus der Folgewirbelschicht in Wirbelschichtraumbereich 12b hat die intermediäre Temperatur T_{GX}. Prozessgas aus der Folgewirbelschicht in Wirbelschichtraumbereich 12c hat die Temperatur T_{GE}.

Partikel beziehungsweise Granulat aus der Folgewirbelschicht in Wirbelschichtraumbereich 12c hat die Temperatur T_{PE}. Partikel beziehungsweise Granulat aus der Primärwirbelschicht in Wirbelschichtraumbereich 12a hat die Temperatur T_{PP}. Partikel beziehungsweise Granulat aus der Folgewirbelschicht in Wirbelschichtraumbereich 12b hat die intermediäre Temperatur T_{PX}.

Das Prozessabgas aus dem Wirbelschichtraumbereich 12c ist Prozessgas des Wirbelschichtraumbereichs 12b. Das Prozessabgas aus dem Wirbelschichtraumbereich 12b ist Prozessgas des Wirbelschichtraumbereichs 12a. Da die jeweiligen Gaszuführungen gleichzeitig die Gasableitungen eines anderen Wirbelschichtraumbereiches sind, weisen sie eine Mündung einer Gasableitung aus einem anderen Wirbelschichtraumbereich auf.

Figur 4 zeigt schematisch eine Anordnung mit mehreren Wirbelschichtraumbereichen 13a, 13b, 13c bezüglich Prozessgasfluss parallel angeordnet. Prozessabgas aus derjenigen Wirbelschicht, in welche die Partikel direkt nach ihrer Erzeugung eintreten, - also der Primärwirbelschicht - in Wirbelschichtraumbereich 13a wird nach Vermischung gemeinsam mit zumindest einer Teilmenge des Prozessabgas aus den beiden weiteren Wirbelschichten - beziehungsweise

Folgewirbelschichten - in den Wirbelschichtraumbereichen 13b und 13 c abgeleitet. Der Primärwirbelschicht und den Folgewirbelschichten wird das gleiche Prozessgas zugeführt über die Gasspeiseleitung 14, die sich entsprechend verzweigt. Der Strom von Partikeln in die Primärwirbelschicht, von der Primärwirbelschicht in die Folgewirbelschicht in Wirbelschichtraumbereich 13b, von dort in die Folgewirbelschicht in Wirbelschichtraumbereich 13c, und aus der Folgewirbelschicht in Wirbelschichtraumbereich 13c ist mit dicken Pfeilen dargestellt. In der Primärwirbelschicht werden die Partikel auf die Primärtemperatur T_{PP} gekühlt, in der Folgewirbelschicht in Wirbelschichtraumbereich 13c auf die Endtemperatur T_{PE}. Abgas 15 aus der Folgewirbelschicht in Wirbelschichtraumbereich 13c hat die Endtemperatur T_{GE}, Abgas 16 aus der Primärwirbelschicht hat die Primärtemperatur T_{GP}. Diese beiden Abgase werden gemeinsam mit dem Abgas aus dem Wirbelschichtraumbereich 13b - mit einer Temperatur T_{GX} aus der Kühlung der Partikel auf die Temperatur T_{PX} - aus dem Granulator abgeleitet, erzielen eine Mischtemperatur T_{GPE}, die jeweiligen Gasableitungen münden ineinander.

### Liste der Bezugszeichen

- 1: Granulator
- 2: Umhüllung
- 3: Zerstäubereinheit
- 4: Zufuhreinrichtung
- 5: Wirbelschicht
- 6: Wirbelschichtraumbereich
- 7: Gaszuführung
- 7a,7b: Zufuhrzonen
- 8: Gasableitung
- 9a,9b: Granulataustrag
- 10a,10b,10c,10d: Zonen
- 11: Vorrichtung zum Steuern und/oder Regeln
- 12a,12b,12c: Wirbelschichtraumbereiche
- 13a,13b,13c: Wirbelschichtraumbereiche
- 14: Gasspeiseleitung
- 15: Abgas aus der Folgewirbelschicht
- 16: Abgas aus der Primärwirbelschicht

## Patentansprüche

1. Verfahren zur Trockengranulierung von schmelzflüssigem Material, wobei aus diesem erzeugte Partikel in zumindest einer Wirbelschicht mittels Prozessgas gekühlt werden, **dadurch gekennzeichnet, dass**
zumindest in derjenigen Wirbelschicht, in welche die Partikel direkt nach ihrer Erzeugung eintreten, die Zuführung des Prozessgases in die Wirbelschicht in mehreren separaten Zonen erfolgt.

2. Verfahren nach Anspruch 1, **dadurch gekennzeichnet, dass** der Volumenfluss und/oder Druck des Prozessgases in zumindest zwei Zonen unabhängig von anderen Zonen gesteuert und/oder geregelt wird.

3. Verfahren nach Anspruch 1 oder 2, **dadurch gekennzeichnet, dass** die Höhe der Wirbelschicht über, bevorzugt senkrecht über, zumindest zwei Zonen bestimmt wird.

4. Verfahren nach einem der Ansprüche 1 bis 3, **dadurch gekennzeichnet, dass** die Temperatur in der Wirbelschicht über, bevorzugt senkrecht über, zumindest zwei Zonen bestimmt wird.

5. Verfahren nach einem der Ansprüche 1 bis 4, **dadurch gekennzeichnet, dass** die Intensität der Wirbelschicht über, bevorzugt senkrecht über, zumindest einer der Zonen bestimmt wird.

6. Verfahren nach einem der Ansprüche 1 bis 5, **dadurch gekennzeichnet, dass** stufenweise Kühlung auf eine Endtemperatur erfolgt, zuerst in derjenigen Wirbelschicht, in welche die Partikel direkt nach ihrer Erzeugung eintreten, auf eine Primärkühltemperatur, und nachfolgend in zumindest einer weiteren Wirbelschicht auf die Endtemperatur.

7. Verfahren nach einem der Ansprüche 1 bis 6, **dadurch gekennzeichnet, dass** Prozessabgas aus derjenigen Wirbelschicht, in welche die Partikel direkt nach ihrer Erzeugung eintreten, nach Vermischung gemeinsam mit zumindest einer Teilmenge des Prozessabgas aus zumindest einer der weiteren Wirbelschichten abgeleitet wird.

8. Granulator umfassend innerhalb einer Umhüllung des Granulators eine Zerstäubereinheit, eine Zufuhreinrichtung zur Zufuhr von schmelzflüssigem Material zur Zerstäubereinheit, zumindest einen Wirbelschichtraumbereich mit einer Gaszuführung für Prozessgas, und zumindest eine Gasableitung für Prozessabgas aus dem Wirbelschichtraumbereich,
**dadurch gekennzeichnet, dass**
zumindest für den Wirbelschichtraumbereich, der zum Eintritt von Partikeln direkt nach ihrer Erzeugung mittels Zerstäubereinheit geeignet ist, die Gaszuführung mehrere Zufuhrzonen aufweist.

9. Granulator nach Anspruch 8, umfassend eine Vorrichtung zum voneinander unabhängigen Steuern und/oder Regeln des Volumenfluss und/oder des Druckes des Prozessgases in zumindest zwei Zufuhrzonen.

10. Granulator nach Anspruch 8 oder 9, **dadurch gekennzeichnet, dass** der Granulator eine Vorrichtung zur Bestimmung der Höhe einer im Betrieb in dem Wirbelschichtraumbereich ausgebildeten Wirbelschicht über zumindest zwei Zufuhrzonen umfasst.

11. Granulator nach einem der Ansprüche 8 bis 10, **dadurch gekennzeichnet, dass** der Granulator eine Vorrichtung zur Bestimmung der Temperatur einer im Betrieb in dem Wirbelschichtraumbereich ausgebildeten Wirbelschicht über zumindest zwei Zufuhrzonen umfasst.

12. Granulator nach einem der Ansprüche 8 bis 11, **dadurch gekennzeichnet, dass** der Granulator eine Vorrichtung zur Bestimmung der Intensität einer im Betrieb in dem Wirbelschichtraumbereich ausgebildeten Wirbelschicht über zumindest einer Zufuhrzone umfasst.

13. Granulator nach einem der Ansprüche 8 bis 12, **dadurch gekennzeichnet, dass** der Granulator mehrere Wirbelschichtraumbereiche umfasst.

14. Granulator nach einem der Ansprüche 8 bis 13, **dadurch gekennzeichnet, dass** die Gasableitung des Wirbelschichtraumbereiches, der zum Eintritt von Partikeln direkt nach ihrer Erzeugung mittels Zerstäubereinheit geeignet ist, zumindest eine Mündung einer Gasableitung aus zumindest einem anderen Wirbelschichtraumbereich aufweist.

15. Signalverarbeitungseinrichtung mit einem maschinenlesbaren Programmcode, **dadurch gekennzeichnet, dass** er Steuer und/oder Regelbefehle zur Durchführung eines Verfahrens nach einem der Ansprüche 1 bis 7 aufweist.
